# DEMANDE DE BREVET EUROPEEN

(11) **EP 0 691 262 A1**
(43) Date de publication de la demande: **10.01.1996**
(21) Numéro de dépôt: 95401606.9
(22) Date de dépôt: 04.07.1995
(51) Int. Cl.: B62J 6/18, B62J 15/00

(54) **Garde-boue pour bicyclette et procédé de réalisation associé**

(30) Priorité: 04.07.1994 FR 9408218
(71) Demandeur: PRODECE, F-77140 Nemours (FR)
(72) Inventeur: Cagnion, Laurent, F-77250 Villemer (FR)
(74) Mandataire: Pontet, Bernard

(57) **Abrégé**

Garde-boue (1) pour bicyclette comprenant une âme métallique (10) coextrudée avec un revêtement plastique (11, 12) et des moyens (3) pour relier électriquement un dispositif générateur électrique à un dispositif d'éclairage fixé sur ce garde-boue (1).

Les moyens de liaison électrique comprennent un câble d'alimentation électrique (3) reliant une borne du dispositif de génération électrique à une borne du dispositif d'éclairage fixé au garde-boue (1). Ce câble (3) est contenu dans une gaine (2) maintenue contre la paroi intérieure (13) dudit garde-boue, notamment par des points de colle (1).

Utilisation pour la réalisation de garde-boue pour bicyclettes équipées d'un dispositif d'éclairage.

## Description

La présente invention concerne un garde-boue pour bicyclette et un procédé de réalisation associé.

Des impératifs évidents de sécurité routière ont depuis longtemps incité les fabricants de bicyclette à concevoir des garde-boue intégrant, outre leur fonction initiale, des fonctions de liaison électrique et de support de dispositifs d'éclairage. Par ailleurs, des techniques nouvelles de fabrication des garde-boue sont apparues pour répondre à des exigences de légèreté et de solidité et à des contraintes toujours plus fortes sur les coûts de fabrication. Il en est ainsi des garde-boue du type à âme métallique coextrudée avec un revêtement plastique.

On connaît des garde-boue pour bicyclette, du type à âme métallique coextrudée avec un revêtement plastique dans lesquels c'est l'âme métallique du garde-boue elle-même qui sert de conducteur, le retour de courant se faisant par les tringles de fixation du garde-boue.

On constate généralement certains problèmes de détérioration, à la longue, des contacts que nécessite l'alimentation par l'âme du garde-boue coextrudée. Ces contacts sont assurés par des prises-pressions qui perdent leur conductivité.

On connaît par ailleurs des garde-boue en acier inoxydable dans lesquels l'alimentation électrique comporte un fil monté dans une gaine, cette gaine étant logée dans un bord replié intérieurement du garde-boue, notamment dans le document NL-A-47 900. Ce type de liaison électrique suppose une configuration particulière du garde-boue, qui n'est pas actuellement prévue avec des garde-boue du type à âme métallique coextrudée. On connaît également, notamment par le document FR-A-1 135 667, des garde-boue métalliques comprenant sur leur face intérieure un câble d'alimentation, ce câble d'alimentation étant logé dans un canal prévu à cet effet. Le câble peut également être fixé à la paroi intérieure par des pièces ou bandes de fixation.

Un inconvénient majeur rencontré avec les garde-boue selon l'art antérieur réside dans la difficulté ou l'impossibilité de remplacer un câble d'alimentation défectueux.

Le but de l'invention est de remédier à ces inconvénients en proposant un garde-boue du type à âme métallique coextrudée qui présente, en matière d'alimentation électrique du dispositif d'éclairage, une fiabilité accrue par rapport à celle observée avec les garde-boue actuels, tout en étant réalisable de manière simple.

Suivant l'invention, le garde-boue pour bicyclette comprenant une âme métallique coextrudée avec un revêtement plastique et des moyens pour relier électriquement un dispositif générateur électrique à des moyens d'éclairage, ces moyens de liaison électrique comprenant au moins un câble d'alimentation électrique reliant une borne du dispositif de génération électrique à une borne des moyens d'éclairage, est caractérisé en ce que le câble d'alimentation est contenu dans une gaine fixée à la paroi intérieure du garde-boue en des points prédéterminés par des moyens de fixation.

Ainsi, avec un garde-boue selon l'invention, on évite le problème du manque de fiabilité à long terme posé par l'utilisation de l'âme métallique comme conducteur électrique et de contacts qui risquent de se corroder, et on ne conditionne pas le maintien en place d'un câble d'alimentation à l'existence d'un bord replié du garde-boue. Par ailleurs, avec la présente invention, ce n'est pas le câble d'alimentation qui est fixé sur la paroi intérieure du garde-boue, mais une gaine. Ceci procure la possibilité de remplacer le câble d'alimentation sans devoir altérer le mode de fixation. De plus, la mise en oeuvre d'une gaine contribue à la protection du câble d'alimentation et donc accroît la fiabilité de l'alimentation électrique du dispositif d'éclairage. Cette fonction de protection assurée par la gaine prend notamment toute son importance lors d'opérations de démontage/remontage de roues.

Ce mode de réalisation est particulièrement peu coûteux puisqu'il suppose la simple mise en oeuvre d'une gaine, généralement en matière plastique ou équivalent qui peut être, par exemple, collée en plusieurs points. Le câble est alors à l'abri de tout risque d'arrachement ou de détérioration, notamment en cas de mauvaise manoeuvre lors d'opérations de montage et/ou démontage de la roue.

Suivant un autre aspect de l'invention, il est proposé un procédé mis en oeuvre pour la réalisation d'un garde-boue selon l'invention, comprenant les opérations suivantes :
- le perçage dans ledit garde-boue d'au moins deux trous pour le passage d'un câble d'alimentation, un premier trou étant disposé en regard d'un dispositif générateur électrique et un second trou étant disposé pour le passage du câble vers un dispositif d'éclairage ;
- l'insertion de ce câble d'alimentation dans une gaine ; et
- l'installation et la fixation de cette gaine contre la paroi intérieure entre les premier et second trous de passage.

D'autres particularités et avantages de l'invention apparaîtront encore dans la description ci-après. Aux dessins annexés donnés à titre d'exemples non limitatifs:
- la figure 1 illustre une vue partielle d'un garde-boue selon l'invention ;
- la figure 2 représente de façon simplifiée un exemple de mise en oeuvre d'un garde-boue selon l'invention ;
- la figure 3 représente un premier exemple de fixation d'une gaine d'alimentation au sein d'un garde-boue selon l'invention ;
- la figure 4 est une vue agrandie d'un détail significatif de la figure 3 ;
- la figure 5 représente un second exemple de fixation d'une gaine d'alimentation au sein d'un garde-boue selon l'invention ; et
- la figure 6 illustre un troisième et un quatrième exemple de fixation d'une gaine d'alimentation.

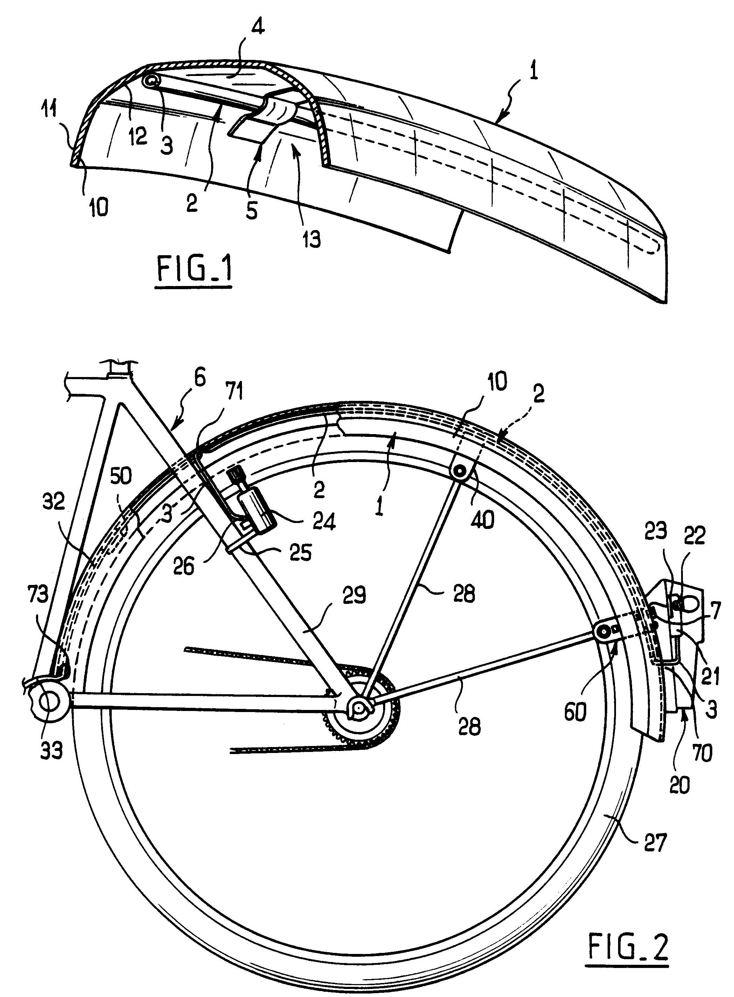

On va maintenant décrire un exemple de réalisation d'un garde-boue selon l'invention, en même temps que plusieurs modes de fixation mis en oeuvre dans ce garde-boue, en référence aux figures 1 à 6.

Un garde-boue 1 selon l'invention comprend, en référence à la figure 1, une âme métallique 10 coextrudée avec un revêtement plastique 11, 12 recouvrant les parois intérieure et extérieure de l'âme métallique 10. Deux gaines 2 et 32 en matière plastique contenant chacune un câble d'alimentation électrique 3 et respectivement 33 sont fixées sur la paroi intérieure 13 du garde-boue 1. Le câble d'alimentation électrique 3, qui peut être isolé ou non, a pour fonction de relier électriquement une borne de sortie 26 d'une dynamo 24 à une borne d'entrée 21 d'un dispositif d'éclairage 20 fixé sur le garde-boue 1, en référence à la figure 2. Le câble 33 relie la même borne 26 de la dynamo 20 avec un dispositif d'éclairage avant de la bicyclette (non représenté). Les câbles 3 et 33 sont introduits à l'intérieur du garde-boue 1 par un trou de passage 71 ménagé dans ledit garde-boue 1 en regard de la dynamo 24. Les gaines 2 et 32 qui ont pour fonction d'abriter les câbles d'alimentation 3 et 33 tout le long de leur parcours à l'intérieur du garde-boue 1 depuis la dynamo 24 vers les dispositifs d'éclairage, peuvent être maintenues contre la paroi intérieure 13 par des moyens de fixation 5 qui vont être décrits dans la suite. Le câble d'alimentation 3 aboutit dans le dispositif d'éclairage à travers un trou 70 ménagé dans le garde-boue 1. A partie du trou 71, le câble 33 s'étend en direction opposée au câble 3 vers un trou 73 situé au voisinage de l'extrémité antérieure du garde-boue. La dynamo 24, ou génératrice dynamométrique, entraînée par la rotation de la roue 27, génère une tension électrique sensiblement continue qui est fournie aux bornes 23, 21 du dispositif d'éclairage 20 au moyen, d'une part, du câble d'alimentation 3 contenu dans la gaine 2, et d'autre part d'un retour de masse à travers des tringles de fixation 28 disposées entre le garde-boue 1 et le cadre de la bicyclette 6 recevant ce garde-boue 1. Un tel retour de masse est classiquement mis en oeuvre dans les bicyclettes équipées de garde-boue plastiques munis d'une âme métallique. Une des bornes 23 d'alimentation d'une ampoule 22 au sein du dispositif d'éclairage 20 est en contact électrique, via par exemple un ensemble vis-écrou 7 de fixation au garde-boue 1 d'une pièce 60 prévue pour recevoir une extrémité de la tringle de fixation 28. Le retour de courant s'effectue ainsi via une succession de pièces électriquement conductrices: la pièce de fixation 60, des tringles de fixation 28 et une portion 29 du cadre de la bicyclette 6.

On peut envisager plusieurs modes possibles de fixation de la gaine 2 contre la paroi intérieure 13 du garde-boue 1, parmi lesquels :
- le collage ou la soudure ultrasons sur toute sa longueur ou par points contre la paroi intérieure du garde-boue ;
- des arceaux ou anneaux plastiques soudés ou collés à l'intérieur du garde-boue ;
- des pièces de fixation métallique.

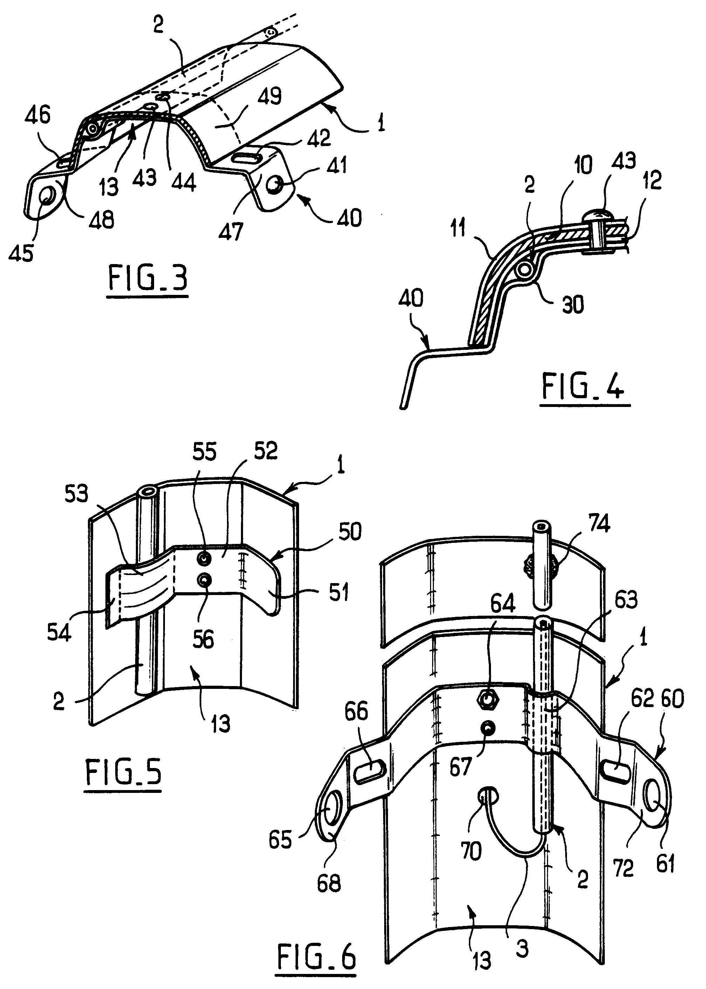

On va maintenant décrire, en référence aux figures 3 à 6, plusieurs modes de fixation mettant en oeuvre des pièces de fixation métalliques et des collages, décrits en ce qui concerne la gaine 2. Il faut d'ailleurs noter que sur un même garde-boue, plusieurs modes de fixation distincts peuvent être mis en oeuvre, sans pour autant limiter la portée de l'invention.

Dans un premier mode de fixation illustré en figures 3 et 4, une pièce de fixation métallique 40 présente une portion centrale 49 qui épouse sensiblement la paroi intérieure 13 du garde-boue 1 mais présente sur un côté une zone de déformation 30 ménageant un espace entre la paroi intérieure 13 et la pièce de fixation 40, destiné à recevoir la gaine 2. La pièce de fixation 40 est elle-même fixée au garde-boue 1 par des rivets 43, 44, et comprend à chaque extrémité des pattes de fixation extérieures 47, 48 dotées par exemple de trous 41, 42; 45, 46 prévus pour recevoir des tringles de fixation, telles que 28 à la figure 2, ou d'autres accessoires.

On peut également prévoir d'autres types de pièces de fixation métalliques ne comportant pas de patte de fixation extérieure, ces pièces de fixation étant alors mises en oeuvre à la seule fin de maintenir la gaine contre la paroi intérieure 13 du garde-boue. Ceci est le cas en figure 5, dans laquelle une pièce de fixation 50 est disposée sur la paroi intérieure du garde-boue 1 et fixée à ce garde-boue par un ou plusieurs rivets 55, 56. Cette pièce de fixation métallique 50 comprend une partie centrale 52 recevant les rivets 55, 56, une première partie latérale 51 épousant sensiblement la forme de la paroi intérieure 13 du garde-boue 1, et une seconde partie latérale 53 préalablement déformée pour maintenir la gaine 2 contre la paroi intérieure 13, l'extrémité 54 de cette seconde partie latérale 53 venant sensiblement en contact avec la paroi intérieure 13 du garde-boue 1 pour empêcher toute sortie latérale de la gaine 2.

On peut également prévoir, en référence aux figures 2 et 6, une pièce de fixation 60 ayant des fonctions multiples
- liaison de tringles de fixation 28 avec le garde-boue 1 ;
- maintien et fixation de la gaine 2 contre la paroi intérieure 13 du garde-boue ; et
- fixation du dispositif d'éclairage 20 au garde-boue 1.

Cette pièce de fixation 60 présente une forme semblable à celle illustrée en figure 3 et comprend notamment une zone de forme 63 ménageant un espace dans lequel est placée la gaine 2. Elle peut être fixée au garde-boue 1 par un ou plusieurs rivets 67 et/ou un ensemble vis/écrou 64 permettant notamment de fixer le dispositif d'éclairage 20 (non représenté en figure 6) au garde-boue 1. La gaine 2 est interrompue pour permettre au câble d'alimentation 3 qu'elle abrite d'être passé dans le trou 70 ménagé dans le garde-boue 1 pour être relié à une borne d'entrée du dispositif d'éclairage 20. La pièce de fixation 60 comprend en outre des pattes de fixation 68, 72 dotées de trous de fixation 61, 62 ; 65, 66 permettant la liaison des tringles de fixation 28 ou autres accessoires à la pièce de fixation 60.

La figure 6 ilustre également la fixation de la gaine 2 par un point de colle 74. Dans un exemple pratique, la gaine 2 peut être tenue par un dispositif 40, un dispositif 60, un point de colle 74 entre ceux-ci ainsi qu'entre le dispositif 40 et le trou 71. La gaine 32 est tenue par un dispositif 50 et des points de colle 74.

Des garde-boue selon l'invention peuvent être réalisés selon un procédé de réalisation simple et peu coûteux mettant en oeuvre des pièces de fixation métalliques. En effet, il suffit de prévoir à titre d'exemple les opérations suivantes pour un garde-boue comprenant une âme métallique coextrudée avec un revêtement plastique :
- perçage dans le garde-boue 1 de trous 70, 71, 73 destinés au passage des câbles d'alimentation 3 et 33, au niveau respectivement des emplacements prévus pour la dynamo 24, le dispositif d'éclairage 20, et le passage du câble 33 vers l'avant ;
- insertion préalable des câbles d'alimentation 3 et 33 dans les gaines 2 et respectivement 32 ;
- mise en place et fixation des gaines 2 et 32 contre la paroi intérieure 13 du garde-boue 1 entre les deux trous de passage 71, 70, et 71, 73, et passage des câbles d'alimentation 3, 33 dans les trous 70, 71, 73 ;
- rivetage et/ou vissage des pièces de fixation 40, 50, 60 des gaines 2 et 32, en particulier de la pièce de fixation associée 60 au dispositif d'éclairage 20 ;
- connexion des câbles d'alimentation, d'une part à une borne de sortie de la dynamo, et d'autre part, en ce qui concerne le câble 3, à une borne d'entrée du dispositif d'éclairage 20 ; et
- installation des tringles de fixation, en particulier liaison avec les pattes des pièces de fixation (retour de masse).

Bien sûr, l'invention n'est pas limitée aux exemples qui viennent d'être décrits et de nombreux aménagements peuvent être apportés à ces exemples sans sortir du cadre de l'invention. Ainsi, le nombre de pièces de fixation mis en oeuvre par garde-boue n'est pas limité par l'invention. Par ailleurs, on peut prévoir une combinaison de différents modes de fixation pour un même garde-boue. Les matériaux constitutifs des pièces de fixation peuvent être quelconques. S'ils ne sont pas des matériaux conducteurs, il faudra cependant prévoir une continuité électrique pour le retour de masse par d'autres moyens classiques. S'il est souhaité que le retour de masse se fasse par câble, on peut glisser le câble d'alimentation et le câble de retour dans la gaine fixée à l'intérieur du garde-boue.

## Revendications

1. Garde-boue (1) pour bicyclette comprenant une âme métallique (10) coextrudée avec un revêtement plastique (11, 12) et des moyens (3) pour relier électriquement un dispositif générateur électrique (24) à des moyens d'éclairage (20), ces moyens de liaison électrique comprenant au moins un câble d'alimentation électrique (3, 33) destiné à relier une borne (26) du dispositif de génération électrique (24) à une borne (21) des moyens d'éclairage (20), caractérisé en ce que le câble d'alimentation (3, 33) est contenu dans une gaine (2, 32) fixée contre la paroi intérieure (13) du garde-boue (1) en des points prédéterminés par des moyens de fixation (5, 40, 50, 60, 74).

2. Garde-boue (1) selon la revendication 1, caractérisé en ce que les moyens de fixation comprennent des points de colle (74) entre la gaine (2) et la paroi intérieure (13) du garde-boue (1).

3. Garde-boue (1) selon l'une des revendications 1 ou 2, caractérisé en ce que les moyens de fixation comprennent en outre une pièce de fixation reliée mécaniquement au dispositif d'éclairage (20) par des moyens de liaison mécanique (64), notamment un ensemble vis/écrou, et en ce qu'il comporte un trou (70) disposé au niveau de ce dispositif d'éclairage (20), ce trou (70) permettant le passage du câble d'alimentation (3) entre la gaine (2) maintenue par ladite pièce de fixation (60) et interrompue au voisinage de cette pièce de fixation (60) et le dispositif d'éclairage (20) placé sur la paroi extérieure dudit garde-boue (1).

4. Garde-boue selon l'une des revendications précédentes, caractérisé en ce qu'il comprend deux câbles (3, 33) s'étendant en directions opposées dans des gaines respectives (2, 32) le long de la paroi intérieure du garde-boue, l'un jusqu'à un dispositif d'éclairage arrière (20) fixé au garde-boue, l'autre jusqu'à un trou de passage (73) au voisinage de l'extrémité avant du garde-boue.

5. Garde-boue selon l'une des revendications précédentes, caractérisé en ce qu'il comprend en outre au titre des moyens de fixation, des anneaux en matière plastique soudés ou collés contre la paroi intérieure dudit garde-boue, dans lesquels la gaine contenant le câble d'alimentation est enfilée.

6. Garde-boue selon l'une des revendications précédentes, comprenant en outre un câble de retour, caractérisé en ce que le câble d'alimentation et le câble de retour sont insérés dans une même gaine.

7. Procédé mis en oeuvre pour la réalisation d'un garde-boue (1) selon l'une des revendications précédentes, comprenant les opérations suivantes :
- le perçage dans ledit garde-boue (1) d'au moins deux trous (70, 71, 73) pour le passage d'au moins un câble d'alimentation (3, 33), un premier trou (71) étant réalisé au niveau d'un dispositif générateur électrique (24) et un second trou (70, 73) étant réalisé pour le passage vers des moyens d'éclairage (20) ;
- l'insertion de ce câble d'alimentation (3) dans une gaine (2, 32) ; et
- l'installation et la fixation de cette gaine (2, 32) contre la paroi intérieure (13) entre les premier et second trous de passage (70, 71, 73).

8. Procédé selon la revendication 7, caractérisé en ce que l'opération de fixation de la gaine comprend en outre, en des points prédéterminés (74) de la paroi intérieure, des étapes de collage de ladite gaine contre cette paroi intérieure.

9. Procédé selon la revendication 7, caractérisé en ce que l'opération de fixation de la gaine comprend en outre, en des points prédéterminés de la paroi intérieure, des étapes de soudure par ultrasons de ladite gaine contre cette paroi intérieure.
